# EUROPEAN PATENT APPLICATION

(11) **EP 3 808 242 A1**
(43) Date of publication of application: **21.04.2021**
(21) Application number: 19820617.9
(22) Date of filing: 04.06.2019
(51) Int. Cl.: A47L 9/28, E01H 1/08, A01G 20/47, G05B 19/04

(54) **GARDEN POWER TOOL AND CONTROL METHOD THEREFOR**

(30) Priority: 14.06.2018 CN 201810614633
(71) Applicant: Positec Power Tools (Suzhou) Co., Ltd, Suzhou, Jiangsu 215123 (CN)
(72) Inventor: GAO, Don Zhendong, Suzhou, Jiangsu 215123 (CN); LIU, Changhua, Suzhou, Jiangsu 215123 (CN); SHENG, Xiaochu, Suzhou, Jiangsu 215123 (CN); HE, Mingming, Suzhou, Jiangsu 215123 (CN); ZHA, Xiahong, Suzhou, Jiangsu 215123 (CN); YANG, Xiaofei, Suzhou, Jiangsu 215123 (CN)
(74) Representative: Dentons UK and Middle East LLP
(86) International application number: PCT/CN2019/089952
(87) International publication number: WO 2019/237968

(57) **Abstract**

The present invention relates to a garden power tool and a control method thereof. The garden power tool includes a detection unit and a control unit. The detection unit is configured to obtain target data. The target data is used for representing an operating state feature of the air tube in an operating mode. The control unit is connected to the detection unit and a motor. The control unit is configured to determine, according to the target data, whether the garden power tool in the operating mode is expected to be in an operating state or a sleep state, to control, according to a determination result, a rotational speed of the motor to match the operating state or the sleep state. A user does not need to change operating habits. The rotational speed of the motor may be adjusted by only a motion such as lifting or lowering an air tube by moving the garden power tool, to reduce the power usage of the direct current blowing-suction machine in a process of not sucking an object, thereby saving energy.

## Description

### Technical Field

The present invention relates to the field of garden power tool technologies, and in particular, to a garden power tool and a control method thereof.

### Related Art

Power tools having a blowing function and/or a suction function are widely applied in life. For example, a blowing-suction apparatus is a common outdoor power cleaning tool, and is mainly configured to clean and collect garbage such as leaves. The blowing-suction apparatus generally has a blowing mode and a suction mode. In the blowing mode, the blowing-suction apparatus blows air to gather leaves scattered on the ground. In the suction mode, the blowing-suction apparatus generates suction and cooperates with a collection apparatus to suck leaves into the collection apparatus, thereby avoiding manual cleaning and saving manpower and time.

Because the blowing-suction apparatus can implement two different functions, namely, a blowing function and a suction function, it is necessary to consider the characteristics of both functions and maximize blowing performance and suction performance. As a result, the structure of a blowing apparatus cannot be directly used. Generally, when operating the blowing-suction apparatus to suck leaves or other target objects discontinuously distributed on the ground, a user needs to frequently move the blowing-suction apparatus to place a nozzle of an air tube over target objects to ensure a blowing-suction effect. In the process, a rotational speed of a motor of the blowing-suction apparatus does not change.

In this way, the blowing-suction apparatus actually does not suck a target object in the process of moving the blowing-suction apparatus. Consequently, the high-speed rotation of the motor causes a waste of electrical energy. Especially, for a blowing-suction machine powered by a battery pack, if the capacity of the battery pack is not increased, a standby time is affected. If the capacity of the battery pack is increased, the weight of the battery pack is increased, and the layout design of the entire blowing-suction apparatus becomes more difficult, to affect the operability of the blowing-suction apparatus. Moreover, the rotational speed of the motor is changed by manually adjusting gears, resulting in complex operations and affecting the operability of the blowing-suction apparatus.

### SUMMARY

Based on this, in view of the problem that adequate operation convenience and energy conservation cannot be both achieved when a conventional direct current blowing-suction machine sucks target objects, it is necessary to provide a direct current blowing-suction machine with improved operation convenience and energy conservation and a control method thereof.

A garden power tool is powered by a battery pack, and includes:
a main housing;
a motor, disposed in the main housing;
a fan assembly, driven by the motor to rotate to generate an airflow; and
an air tube assembly, connected to the main housing, and including an air tube used for sucking a target object, where
when the garden power tool is in an operating mode, the fan assembly rotates to generate a suction airflow flowing in from the air tube; and
in the operating mode, the garden power tool includes an operating state of normally sucking an object and a sleep state of not sucking an object, and the garden power tool further includes:
   a detection unit, configured to obtain target data, the target data being used for representing an operating state feature of the air tube in the operating mode; and
   a control unit, connected to the detection unit and the motor, the control unit being configured to determine, according to the target data, whether the garden power tool in the operating mode is expected to be in the operating state or the sleep state, to control, according to a determination result, a rotational speed of the motor to match the operating state or the sleep state.

When the foregoing garden power tool sucks leaves or other target objects discontinuously distributed on the ground, it may be determined, according to the target data obtained by the detection unit, a target state that the garden power tool in the operating mode is expected to enter, so that the rotational speed of the motor may be adjusted. For example, if it is determined that a direct current blowing-suction machine is expected to be in the operating state, the rotational speed of the motor is controlled at a normal operating level. If it is determined that the garden power tool is expected to be in the sleep state, the rotational speed of the motor is controlled at a relatively low level or to be stopped. In this way, a user does not need to change operating habits. The rotational speed of the motor may be adjusted by only a motion such as lifting or lowering a nozzle of the air tube by moving the garden power tool, to reduce the power usage of the direct current blowing-suction machine in a process of not sucking an object, thereby saving energy. The rotational speed of the motor does not need to be changed by manually adjusting gears, so that operations are convenient, and the direct current blowing-suction machine is more intelligent and operable.

In an embodiment, a diameter of a nozzle of the air tube is in a range of 100 mm to 150 mm.

In an embodiment, in the operating state, the motor operates at a first speed of normal operation; and
in the sleep state, the motor operates at a second speed of not sucking an object, the second speed being less than the first speed.

In an embodiment, when the motor operates at the first speed, the rotational speed of the motor is in a range of 10000 r/min to 30000 r/min.
when the motor operates at the second speed, the rotational speed of the motor is less than 10000 r/min or is 0.

In an embodiment, the target data includes a distance parameter, and the distance parameter is used for representing a distance between a nozzle of the air tube in the operating mode and a cleaning surface.

In an embodiment, the detection unit includes a distance sensor, and the distance sensor is configured to obtain the distance parameter representing the distance between the nozzle of the air tube in the operating mode and the cleaning surface.

In an embodiment, the control unit is configured to compare a distance parameter currently detected by the distance sensor with a preset distance parameter value, when the distance parameter currently detected by the distance sensor is less than or equal to the preset distance parameter value, the garden power tool in the operating mode is expected to be in the operating state, and the control unit controls the rotational speed of the motor to be the first speed; and
when the distance parameter currently detected by the distance sensor is greater than the preset distance parameter value, the garden power tool in the operating mode is expected to be in the sleep state, and the control unit controls the rotational speed of the motor to be the second speed.

In an embodiment, when the distance parameter currently detected by the distance sensor is greater than the preset distance parameter value, after a preset time period, the control unit controls the rotational speed of the motor to switch to the first speed.

In an embodiment, the preset distance parameter value is specifically a punctual value, and the preset distance parameter value is approximately 50 cm.

In an embodiment, the distance sensor is disposed in the main housing or the air tube assembly.

In an embodiment, the target data includes a position parameter, and the position parameter is used for representing a position of the air tube relative to a cleaning surface in the operating mode.

In an embodiment, the detection unit includes a sensing apparatus and a moving member configured to contact the cleaning surface to be forced to move in a preset direction; and

the control unit is configured to: calculate a target parameter value according to a position parameter generated by the sensing apparatus in response to the movement of the moving member, and determine a current distance value of a distance between a nozzle of the air tube in the operating mode and the cleaning surface according to that the target parameter value meets a preset condition, to determine whether the garden power tool in the operating mode is expected to be in the operating state or the sleep state, to control the rotational speed of the motor to match the operating state or the sleep state.

In an embodiment, the sensing apparatus is configured to contact the moving member to perform sensing and generate the position parameter, and the sensing apparatus is a contact sensor switch.

In an embodiment, the sensing apparatus is configured to not contact the moving member to perform sensing and generate the position parameter.

In an embodiment, the detection unit is disposed on the air tube;
the detection unit includes a sliding rheostat and a moving member configured to contact a cleaning surface to be forced to move, and the moving member is connected to a slider of the sliding rheostat; and
the target data includes an electrical parameter of a circuit to which the sliding rheostat is connected, and the control unit is configured to: calculate a target parameter value according to the electrical parameter of the circuit to which the sliding rheostat is connected during the movement of the moving member, and determine a current distance value of a distance between a nozzle of the air tube in the operating mode and the cleaning surface according to that the target parameter value meets a preset condition, to control the rotational speed of the motor to increase to the first speed or decrease to the second speed.

In an embodiment, the detection unit further includes an elastic member, and the elastic member is disposed on the air tube, and is configured to provide a pre-tightening force enabling the moving member to have a moving trend in a direction opposite to the preset direction.

In an embodiment, the target data includes an inertial parameter, the inertial parameter is used for representing an inertial state of the air tube in the operating mode, and the inertial state includes a moving direction of the air tube; the detection unit further includes an inertial sensor, and the inertial sensor is configured to sense and output the inertial parameter related to the inertial state of the air tube; and the control unit is connected to the inertial sensor and is configured to: calculate a target parameter value according to the inertial parameter outputted by the inertial sensor, and determine the inertial state of the air tube according to that the target parameter value meets a preset condition, to determine, according to the inertial state of the air tube, whether the garden power tool in the operating mode is expected to be in the operating state or the sleep state, to control the rotational speed of the motor to match the operating state or the sleep state.

In an embodiment, when the air tube moves downward toward a cleaning surface, the garden power tool in the operating mode is expected to be in the operating state, and the control unit controls the rotational speed of the motor to be the first speed; and
when the air tube moves upward away from the cleaning surface, the garden power tool in the operating mode is expected to be in the sleep state, and the control unit controls the rotational speed of the motor to be the second speed.

In an embodiment, when the air tube swings, the garden power tool in the operating mode is expected to be in the operating state, and the control unit controls the rotational speed of the motor to be the first speed.

In an embodiment, the target data includes a current parameter, the current parameter is used for representing a distance between a nozzle of the air tube in the operating mode and a cleaning surface, the detection unit further includes a current detection circuit configured to obtain a current parameter value, and the control unit determines the distance between the nozzle of the air tube in the operating mode and the cleaning surface according to the current parameter.

In an embodiment, in the operating mode, if the detection unit detects that the current parameter value is less than a first preset current value, the control unit determines that the nozzle is close to the ground, to control the garden power tool to switch to the operating state; and if the detection unit detects that the current parameter value is greater than a second preset current value, the control unit determines that the nozzle is far away from the ground, to control the garden power tool to switch to the sleep state.

In an embodiment, in the operating mode, the control unit controls the garden power tool to start at the second speed.

In an embodiment, the control unit is suitable for controlling a current flowing through the motor, to change the rotational speed of the motor.

In an embodiment, the control unit is further configured to turn off the motor after the garden power tool is in the sleep state for a preset time period.

A control method of a direct current blowing-suction machine is provided. The direct current blowing-suction machine includes an air tube used for sucking a target object. The control method includes the following steps:
obtaining target data, the target data being used for representing an operating state feature of the air tube in an operating mode; and
determining, according to the target data, whether the direct current blowing-suction machine in the operating mode is expected to be in an operating state or a sleep state, to control, according to a determination result, a rotational speed of a motor to match the operating state or the sleep state.

### BRIEF DESCRIPTION OF THE DRAWINGS

FIG. 1 is a schematic structural diagram of a direct current blowing-suction machine according to an embodiment of the present invention;
FIG. 2 is a schematic structural diagram of a direct current blowing-suction machine according to another embodiment of the present invention;
FIG. 3 is a schematic structural diagram of a direct current blowing-suction machine according to still another embodiment of the present invention;
FIG. 4 is a partially enlarged view at B in FIG. 3;
FIG. 5 is a flow block diagram of a control method of a direct current blowing-suction machine according to an embodiment of the present invention; and
FIG. 6 is a schematic diagram of a current change of a direct current blowing-suction machine in an operating mode according to an embodiment of the present invention.

### DETAILED DESCRIPTION

To help understand the present invention, the following describes the present invention more fully with reference to the related accompanying drawings. Exemplary embodiments of the present invention are provided in the accompanying drawings. However, the present invention may be implemented in many different forms, and is not limited in the embodiments described in this specification. On the contrary, an objective of providing the embodiments is to understand the content disclosed in the present invention more fully.

It needs to be noted that an element, when "fixed on" another element, may be directly on the another element, or there may be a central element at the same time. An element, when considered to be "connected" to another element, may be directly connected to the another element or there may be a central element at the same time. The terms "vertical", "horizontal", "left", "right" and similar expressions used in this specification are only for purposes of illustration.

Unless otherwise defined, meanings of all technical and scientific terms used in this specification are the same as that usually understood by a person skilled in the technical field to which the present invention belongs. In this specification, terms used in the specification of the present invention are merely intended to describe objectives of the specific embodiments, but are not intended to limit the present invention. A term "and/or" used in this specification includes any or all combinations of one or more related listed items.

A power tool having a suction function is described first before a direct current blowing-suction machine in the present invention is described in detail, to better understand the technical solutions in the present invention.

If the power tool only implements the suction function, the power tool is a suction-only machine. An air tube assembly of the suction-only machine only includes an air tube used for sucking a target object. If the power tool has at least two operating mode, that is, a blowing mode implementing a blowing function and a suction mode implementing a suction function, the power tool is a blowing-suction machine. The blowing-suction machine may use the blowing function to gather target objects such as leaves scattered on the ground or may use the suction function to suck the leaves into a specified garbage collection apparatus for cleaning. Therefore, generally, the blowing-suction machine may selectively operate in the blowing mode or the suction mode according to an actual requirement of a user.

Generally, the blowing-suction machine includes a direct current blowing-suction machine and an alternating current blowing-suction machine. The direct current blowing-suction machine, that is, a blowing-suction machine powered by a battery pack, is used as an example in the embodiments of the present invention. The direct current blowing-suction machine includes an operating mode. When the direct current blowing-suction machine is in the operating mode, a fan assembly rotates to generate a suction airflow flowing in from an air tube, thereby implementing the suction function. To achieve an adequate suction effect, a diameter of a nozzle of the air tube is in a range of 100 mm to 150 mm.

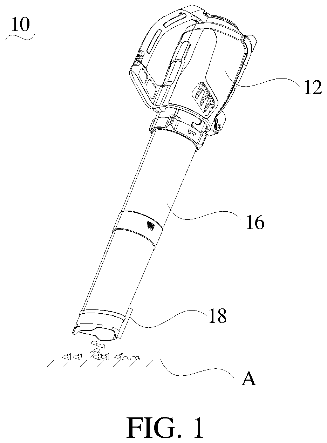

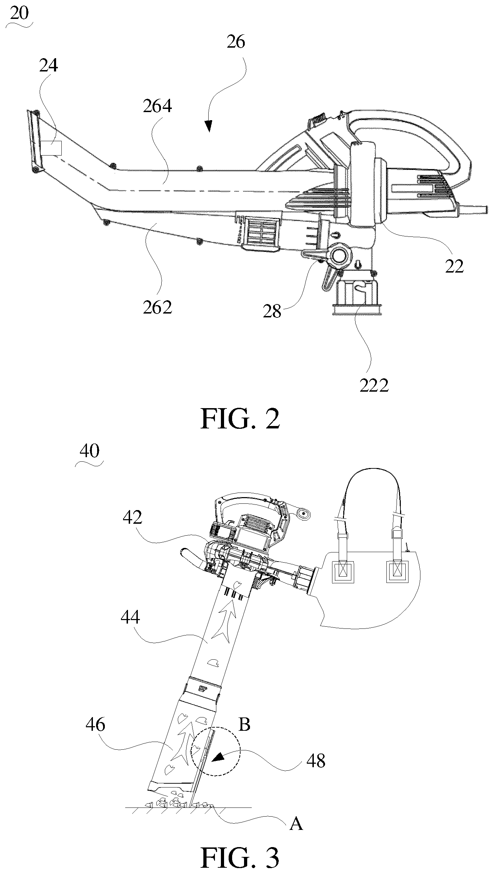

Direct current blowing-suction machines in several forms are described below. According to a quantity of air tubes, the direct current blowing-suction machines are categorized into the following types:
1) As shown in FIG. 1, the direct current blowing-suction machine is a single-tube direct current blowing-suction machine. A motor is located in a main housing 12 and is configured to provide a rotational output. A fan includes at least an axial fan that is driven by the motor to rotate around an axis to generate an airflow flowing in a direction of the axis of the fan. An air tube assembly only includes an air tube 16 having both a suction function and a blowing function. The main housing 12 has a connection interface. The air tube 16 has a nozzle to communicate with the outside. The air tube 16 is connected to the main housing 12 through the connection interface. When the direct current blowing-suction machine is in the blowing mode, the motor drives the fan to rotate in a preset direction. Air is blown out from the nozzle of the air tube 16. When the direct current blowing-suction machine is in the operating mode, the motor drives the fan to rotate in a direction opposite to the preset direction, and air is sucked through the nozzle of the air tube 16.
   The direct current blowing-suction machine further includes a control switch controlling the motor. The control switch operably controls the motor to rotate in a first direction or rotate in a second direction opposite to the first direction, to generate a suction airflow or a blowing airflow, to enable the direct current blowing-suction machine to switch between the blowing mode and the operating mode. Specifically, in an embodiment, the first direction may be a clockwise rotation direction, and the second direction may be a counterclockwise rotation direction.
2) When the direct current blowing-suction machine is a double-tube direct current blowing-suction machine. Similarly, the direct current blowing-suction machine includes a main housing and an air tube assembly. In such a direct current blowing-suction machine, the air tube assembly includes an air blowing tube and an air suction tube that are independent from each other. The main housing is provided with a connection opening. When the direct current blowing-suction machine is in the blowing mode, the air blowing tube is connected to the connection opening. When the direct current blowing-suction machine is in the operating mode, the air suction tube is connected to the connection opening.
   For example, in some embodiments, the motor may be controlled by the control switch to rotate in two opposite directions, to generate a suction airflow and a blowing airflow, to enable the direct current blowing-suction machine to switch between the blowing mode and the operating mode. In some other embodiments, a first fan rotating around a first rotating axis may also be disposed on the air blowing tube, and a second fan rotating around a second rotating axis may be disposed on the air suction tube. In the blowing mode, air enters from an air inlet in the main housing, and passes through the first fan to form an airflow moving in an axial direction of the first rotating axis, and is blown out from the air blowing tube. In the operating mode, air enters the air suction tube from a nozzle of the air suction tube, is driven by the second fan, and eventually flows out from an air outlet in the main housing.
3) As shown in FIG. 2, the direct current blowing-suction machine is a double-tube direct current blowing-suction machine. An air tube assembly 26 includes an air blowing tube 262 and an air suction tube 264. The main housing 22 is provided with an air inlet, an air outlet, and a dust outlet 222. The air blowing tube 262 is separate from or is fixedly connected to the air suction tube 264. The air suction tube 264 is connected to the air inlet. The air blowing tube 262 is connected to the air outlet. In a preferred implementation, the air blowing tube 262 is fixedly connected to the air suction tube 264, and the air blowing tube 262 is located on a lower side of the air suction tube 264. The air blowing tube 262 and the air suction tube 264 extend toward a side of the main housing 22 and extension directions of the air blowing tube and the air suction tube are approximately parallel. A blowing-suction switching mechanism 28 is also disposed on the main housing 22, and includes a control button disposed on the main housing 22 and an adjustment flap located in the main housing 22. The direct current blowing-suction machine may be switched between the blowing mode and the operating mode by adjusting the adjustment flap.

Specifically, in the blowing mode, the dust outlet 222 is closed by the adjustment flap. An airflow enters an inner chamber of the main housing 22 from the air inlet of the air suction tube 264. The sucked airflow, after passing through the fan, is sent to the air blowing tube 262 through the air outlet. In the operating mode, the air blowing opening 262 is closed by the adjustment flap. Leaves, dust and the like enter the air suction tube 264 together with the airflow, enter the inner chamber of the main housing 22 through the air inlet, are crushed by impellers of the fan, and are then sent to a dust collection apparatus through the dust outlet 222. When operating either the suction-only machine or any one of the foregoing blowing-suction machines to suck leaves or other target objects discontinuously distributed on the ground, a user needs to frequently move the machine to place a nozzle of an air tube over a target object to ensure a blowing-suction effect. In the process, a rotational speed of a motor of the blowing-suction apparatus does not change.

In this way, in the process of moving the direct current blowing-suction machine, the direct current blowing-suction machine actually does not suck a target object. Consequently, the high-speed rotation of the motor causes a waste of electrical energy. Especially, for a direct current blowing-suction machine powered by a battery pack, if the capacity of the battery pack is not increased, a standby time is affected. If the capacity of the battery pack is increased, the weight of the battery pack is increased, and the layout design of the entire direct current blowing-suction machine becomes more difficult, to affect the operability of the blowing-suction apparatus. Moreover, the rotational speed of the motor is changed by manually adjusting gears, resulting in complex operations and affecting the operability

Therefore, it is necessary to provide a direct current blowing-suction machine with improved operation convenience and energy conservation.

FIG. 1 is a schematic structural diagram of a direct current blowing-suction machine according to an embodiment of the present invention. For ease of description, only parts related to the embodiments of the present invention are shown.

A direct current blowing-suction machine 10 includes a main housing 12, a motor, a fan assembly, an air tube assembly, a detection unit 18, and a control unit. The motor is disposed in the main housing 12. The fan assembly is driven by the motor to rotate to generate an airflow. The air tube assembly is connected to the main housing 12, and includes an air tube used for sucking a target object.

In an operating mode, the direct current blowing-suction machine has an operating state of normally sucking an object and a sleep state of not sucking an object. In some embodiments, the direct current blowing-suction machine includes a blowing mode. When the direct current blowing-suction machine is in the blowing mode, a user operably switches to the foregoing operating mode. In this case, the direct current blowing-suction machine has the operating state of normally sucking an object and the sleep state of not sucking an object. For example, in some embodiments, the user may adjust the rotation direction of the motor by using the foregoing control switch, and in some other embodiments, may control the adjustment flap by using the blowing-suction switching mechanism to enable the direct current blowing-suction machine to switch between the blowing mode and the operating mode.

In the process of normally sucking an object, the rotational speed of the motor is at a relatively high rotational speed level, and in the process of not sucking an object, the rotational speed of the motor is at a relatively low rotational speed level or is 0. For example, in some embodiments, for sucking leaves or other target objects discontinuously distributed on the ground, when a user operates a machine to move downward or move toward a target object to enable a distance between the nozzle of the air tube 16 used for sucking a target object and a cleaning surface A to be in an appropriate range, the rotational speed of the motor needs to be in a relatively high level, to ensure that the objects such as the leaves to be cleaned are sucked into the foregoing air tube, and therefore the direct current blowing-suction machine is in an operating state. When the user operates the machine to move upward or move away from the cleaning surface A to enable the distance between the nozzle of the air tube 16 used for sucking a target object and the cleaning surface A to be out of the foregoing appropriate range, the rotational speed of the motor needs to be at a relatively low level or to be 0 to save electric energy. Therefore, the direct current blowing-suction machine is in the sleep state.

The detection unit 18 is configured to obtain target data. The target data is used for representing an operating state feature of the air tube 16. Specifically, in an embodiment, the operating state feature of the air tube 16 includes the distance between the nozzle of the air tube 16 in the operating mode and the cleaning surface A or an inertial state of the direct current blowing-suction machine 10 in the operating mode. The control unit is connected to the detection unit 18 and the motor. The control unit is configured to determine, according to the target data, whether the direct current blowing-suction machine 10 in the operating mode is expected to be in the operating state or the sleep state, to control, according to a determination result, the rotational speed of the motor to match the operating state or the sleep state.

In this way, the user does not need to change operating habits. The rotational speed of the motor may be adjusted by lifting or lowering the nozzle of the air tube by moving the direct current blowing-suction machine, to reduce the power usage of the direct current blowing-suction machine in the sleep state, thereby saving energy. The rotational speed of the motor does not need to be changed by manually adjusting gears, so that operations are convenient, and the direct current blowing-suction machine is more intelligent and operable.

It may be understood that, in some embodiments, when the direct current blowing-suction machine is in the blowing mode, the control unit may alternatively control, according to the determination result, the direct current blowing-suction machine to switch from the blowing mode to the operating mode, and then enables the rotational speed of the motor to match the operating state or the sleep state. For example, a user operates a machine in a blowing mode to gather scattered leaves, and then needs to suck the leaves. The user may operates the machine to move downward or move toward a target object to enable a distance between the nozzle of the air tube used for sucking a target object and the cleaning surface A to be in an appropriate range. The control unit determines, according to the target data detected by the detection unit, whether the direct current blowing-suction machine in the operating mode is expected to be in the operating state or the sleep state, may switch from the blowing mode to the operating mode through the rotation direction of the motor, and controls the rotational speed of the motor to match the operating state or the sleep state.

It is easily understood that the target data representing the distance between the nozzle of the air tube 16, used for sucking a target object, of the air tube assembly and the cleaning surface A may be a directly obtained distance value of the distance between the nozzle of the air tube 16 used for sucking a target object and the cleaning surface A or an indirectly obtained parameter of a distance value of the distance between the nozzle of the air tube 16 used for sucking a target object and the cleaning surface A. For example, in some embodiments, for the target data, the distance value of the distance between the nozzle of the air tube 16 and the cleaning surface A may be indirectly obtained by using a position parameter, a current parameter, a voltage parameter or the like.

The cleaning surface A is a to-be-cleaned surface or a surface on which target objects are piled. For example, the cleaning surface A may be a lawn, a carpet, a floor or a ground on which garbage (for example, leaves) is piled. Certainly, in some embodiments, the cleaning surface A may be alternatively a to-be-cleaned object surface such as a wall face or a desk face.

In this embodiment of the present invention, in the operating state, the motor operates at a first speed of normal operation. In the sleep state, the motor operates at a second speed of not sucking an object. It is easily understood that if the direct current blowing-suction machine is in the sleep state, the motor needs to rotate at a low speed or needs to be stopped, to save electric energy. If the direct current blowing-suction machine is in an operating state, the air tube needs to provide sufficient suction, for example, to suck the target objects such as leaves. The motor needs to be kept a relatively high rotational speed. Therefore, the second speed is less than the first speed. Specifically, the first speed is a normal operation speed of the direct current blowing-suction machine. The second speed may be a low-speed level or 0. The first speed may be set according to the type of the direct current blowing-suction machine and different environments to which the direct current blowing-suction machine is applied. This is not limited herein.

Specifically, in an embodiment, when the motor operates at the first speed, the rotational speed of the motor is in a range of 10000 r/min to 30000 r/min. When the motor operates at a second speed, the rotational speed of the motor is less than 10000 r/min or is 0.

In some embodiments of the present invention, the target data includes a distance parameter. The distance parameter is used for representing a distance between a distance sensor and a cleaning surface. In some embodiments, the detection unit 18 includes the distance sensor. The control unit may determine, by using the distance parameter, whether the direct current blowing-suction machine is expected to be in a target state, to control the rotational speed of the motor. Specifically, in an embodiment, the control unit is configured to compare a distance parameter currently detected by the distance sensor with a preset distance parameter value. When the distance parameter currently detected by the distance sensor is less than or equal to the preset distance parameter value, the direct current blowing-suction machine in the operating mode is expected to be in the operating state, and the control unit controls the rotational speed of the motor to be the first speed. When the distance parameter currently detected by the distance sensor is greater than the preset distance parameter value, the direct current blowing-suction machine in the operating mode is expected to be in the sleep state, and the control unit controls the rotational speed of the motor to be the second speed.

In an optimal state, if the distance sensor is located at an end of the nozzle of the air tube 16 used for sucking a target object, a distance value of a distance between the distance sensor and the cleaning surface A is approximately equal to a distance value of a distance between the nozzle of the air tube 16 to the cleaning surface A. In this case, the preset distance parameter value may be basically equal to an optimal leaf suction distance between the nozzle of the air tube 16 and the cleaning surface A. For ease of mounting, the distance value of a distance between the distance sensor and the cleaning surface A is generally not the distance value of the distance between the nozzle of the air tube 16 and the cleaning surface A. Therefore, the preset distance parameter value should include at least a sum of an optimal leaf suction distance between the nozzle of the air tube 16 and the cleaning surface A and a distance between the distance sensor and the end of the nozzle of the air tube 16.

It needs to be noted that because the distance sensor and the cleaning surface A are non-contact ranging, the detection unit 18 may be mounted in the main housing 12 or the air tube assembly. Specifically, in the embodiment shown in FIG. 1, the distance sensor may be mounted at a volute portion, a handle or another position for ease of ranging of the main housing 12 or may be mounted on the air tube 16.

In some embodiments, the distance sensor may be one or more of an ultrasonic ranging sensor, an infrared ranging sensor, a laser ranging sensor or a radar ranging sensor. For example, the distance sensor, when being an infrared distance sensor, includes an infrared emitting tube and an infrared receiving tube. When infrared light emitted by the emitting tube is received by the receiving tube, an offset value is obtained. The distance between the distance sensor and the cleaning surface A may be calculated by using an infrared emission angle, the offset value, a central moment, and a focal length of the filter.

The user, when sucking leaves or other target objects discontinuously distributed on the ground, operates a machine to move downward or move toward a target object, to enable the distance between the nozzle of the air tube 16 used for sucking a target object and the cleaning surface A to reach a critical value in an appropriate range. That is, the distance parameter currently detected by distance sensor is less than or equal to the foregoing preset distance parameter value. The control unit increases the rotational speed of the motor The user operates the machine to move upward or move away from the cleaning surface A, to enable the distance between the nozzle of the air tube 16 used for sucking a target object and the cleaning surface A to be out of the foregoing appropriate range. The direct current blowing-suction machine is in the sleep state, and the control unit controls the rotational speed of the motor to decrease.

In some embodiments of the present invention, when the distance parameter currently detected by the distance sensor is greater than the preset distance parameter value, the control unit controls the rotational speed of the motor to switch to the first speed after a preset time period instead of instantly adjusting the speed. A preset time interval is 0.1s to 3s. In this way, it is ensured that the leaves sucked into the air tube can be sucked into the collection apparatus, and the leaves in the air tube are prevented from falling out of the nozzle of the air tube due to insufficient air power caused by a decrease in the rotational speed of the motor.

In some embodiments of the present invention, the preset distance parameter value is specifically a punctual value. Preferably, the preset distance parameter value is greater than 50 cm. Certainly, in other embodiments, the punctual value may be any punctual value in a range of 10 cm to 100 cm.

It needs to be noted that in some embodiments, the control unit includes an analog-to-digital conversion circuit. The analog-to-digital conversion circuit is configured to perform analog-to-digital conversion on the distance parameter currently detected by the distance sensor, to compare the distance parameter with the preset distance parameter value. In some other embodiments, the distance sensor may further directly output a digital signal. This is not limited herein.

In some embodiments of the present invention, the control unit is configured to control a current inputted into the motor to change the rotational speed of the motor. For example, the control unit determines, according to that the target data meets a preset condition, that the direct current blowing-suction machine is expected to be in a target state, and generates a corresponding control signal. The control signal may be specifically a pulse width modulation (PWM) signal. Specifically, the control unit includes a driving control circuit. The driving control circuit is formed by resistance and power switch drives. The power switch drive is formed by a plurality of bipolar junction transistors and is configured to adjust a duty ratio of the control signal. In other words, the power switch drive decreases a continuous output time of a control signal within a single period according to a received PWM signal to control the rotational speed of the motor by using a power switch assembly. It needs to be noted that the power switch assembly may be a semiconductor switch such as a metal-oxide-semiconductor field-effect transistor (MOSFET).

It may be understood that in some other embodiments, the rotational speed of the motor may be alternatively adjusted in other manners. This is not limited herein.

In some embodiments of the present invention, the control unit may further be configured to stop the motor after the direct current blowing-suction machine is in the sleep state for a preset time period. For example, when not needing to suck target objects such as leaves, the user operates the direct current blowing-suction machine to lift the nozzle of the air tube. Within the preset time period, the distance parameter that is currently detected by the distance sensor and obtained by the detection unit 18 is continuously greater than the preset distance parameter value, indicating that the user no longer needs to operate the machine and the control unit may stop the motor. In this way, the operability of the direct current blowing-suction machine is further improved.

In some embodiments of the present invention, the control unit is further configured to control the rotational speed of the motor to linearly increase or linearly decrease. For example, specifically, in an embodiment, in the process of operating the direct current blowing-suction machine by the user to move toward the cleaning surface A, a parameter of a distance detected by the distance sensor to the cleaning surface A linearly increases, and the control unit controls the rotational speed of the motor to linearly increase to the first speed from the second speed.

In this way, in the process of moving the nozzle of the air tube toward the cleaning surface A, the rotational speed of the motor gradually increases, so that a waiting time for the rotational speed of the motor to reach the first speed can be reduced and it becomes less difficult to control the rotational speed of the motor.

Certainly, the form of the detection unit is not limited to the form in the foregoing embodiment or may be in other forms.

In some embodiments of the present invention, the control unit is configured to: calculate the target parameter value according to the target data, and determine, according to that the target parameter value meets a preset condition, that the direct current blowing-suction machine in the operating mode is expected to be in the operating state or the sleep state. For example, in some embodiments, the control unit is configured to calculate a preset function f(x) of target data x to obtain the target parameter value, and determines, according to that the target parameter value meets the preset condition, a state that the direct current blowing-suction machine in the operating mode is expected to enter. Specifically, in an embodiment, the target parameter value may be an N order derivative of the target data X, where N is a positive value, and the preset condition may be set according to the type of the detection unit. This is not limited herein.

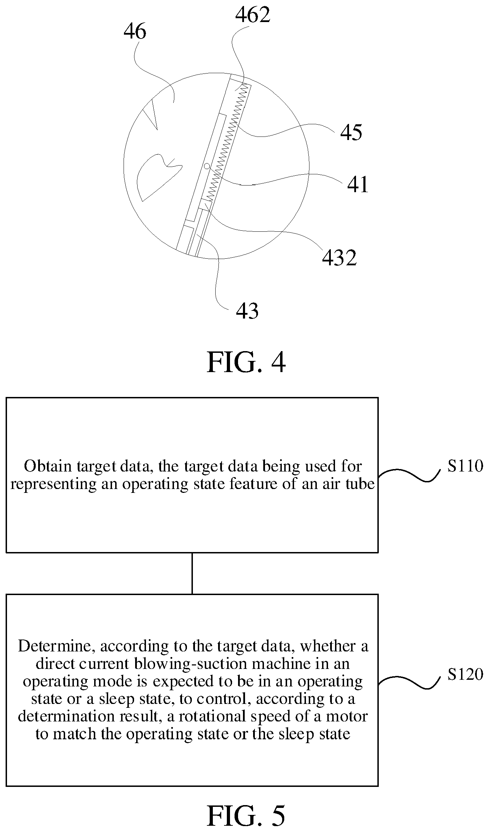

Referring to FIG. 3 and FIG. 4, in some embodiments of the present invention, the target data includes a position parameter.

The detection unit 48 includes a sensing apparatus 41 and a moving member 43 configured to contact the cleaning surface A to be forced to move in a preset direction. The control unit is configured to calculate a target parameter value according to the position parameter generated by the sensing apparatus 41 in response to the movement of the moving member 43, and determine, according to that the target parameter meets the preset condition, a current distance value of the distance between the nozzle of the air tube 16 in the operating mode and the cleaning surface A, to determine a state that the direct current blowing-suction machine in the operating mode is expected to enter, and control the rotational speed of the motor to be a rotational speed matching a corresponding state.

In some embodiments, the sensing apparatus 41 is disposed in the air tube 46, which is used for sucking a target object, of the air tube assembly. The moving member 43 is movably connected to the air tube 46 used for sucking a target object in a longitudinal direction of the air tube 46. The sensing apparatus 41 is disposed in the air tube 46 used for sucking a target object, and is located in a moving path of the moving member 43. An end of the moving member 43 may extend out of the nozzle of the air tube 46 to press against the cleaning surface A.

The control unit is configured to compare the foregoing current distance value with a preset distance value. When the current distance value is less than or equal to the preset distance value, the direct current blowing-suction machine in the operating mode is expected to be in the operating state, and the control unit controls the rotational speed of the motor to be the first speed. When the current distance value is greater than the preset distance value, the direct current blowing-suction machine in the operating mode is expected to be in the sleep state, and the control unit controls the motor at the second speed. The first speed is greater than the second speed.

It needs to be noted that the moving member 43 is affected by the cleaning surface to move to a preset position in a preset direction, and is detected by the sensing apparatus. In this case, the distance between the nozzle of the air tube 46 used for sucking a target object and the cleaning surface A is a critical value in an appropriate range. Specifically, when the user operates the machine to move downward or move toward a target object, the moving member 43 is affected by the cleaning surface A to move in the longitudinal direction of the air tube until the sensing apparatus 41 detects that the moving member 43 moves to the preset position. In this case, the distance between the nozzle of the air tube 46 used for sucking a target object and the cleaning surface A reaches the critical value in the foregoing appropriate range, and the direct current blowing-suction machine is expected to be in the operating state. If the sensing apparatus 41 does not detect the moving member 43 when the user operates the machine to move upward or move away from the cleaning surface A, it indicates that the distance between the nozzle of the air tube 46 used for sucking a target object and the cleaning surface A is out of the foregoing appropriate range, and the direct current blowing-suction machine is expected to be in the sleep state.

Specifically, in some embodiments, for example, the sensing apparatus 41 is a position sensor. A signal sent when the sensing apparatus 41 detects that the moving member 43 reaches the preset position is 1, and a sent signal is 0 when the moving member 43 is not detected. If the signal received by the control unit is 1 and meets the preset condition that the signal is greater than 0, it indicates that the moving member 43 reaches the preset position. If the signal received by the control unit is 0, it indicates that the moving member 43 does not reach the preset position. If signals continuously received by the control unit are 1, it is determined that the current distance value of the distance between the nozzle of the air tube, which is used for sucking a target object, of the air tube assembly in the operating mode and the cleaning surface is in the appropriate range, so that it may be determined that the direct current blowing-suction machine is expected to be in the operating state, to control the rotational speed of the motor to be the first speed. In contrast, if the signals continuously received by the control unit are 0, it is determined that the current distance value of the distance between the nozzle of the air tube, which is used for sucking a target object, of the air tube assembly in the operating mode and the cleaning surface exceeds a critical value in the appropriate range, so that it may be determined that the direct current blowing-suction machine is expected to be in the sleep state, to control the rotational speed of the motor to be the second speed.

Similarly, the first speed is a speed in a normal operating state. The first speed is greater than the second speed. The second speed may be a low-speed level or 0. The first speed may be set according to the type of the direct current blowing-suction machine and different environments to which the direct current blowing-suction machine is applied.

In some embodiments, the detection unit 48 further includes an elastic member 45. The elastic member 45 is disposed in the air tube 46, which is used for sucking a target object, of the air tube assembly, and is configured to provide a pre-tightening force enabling the moving member 43 to have a moving trend in a direction opposite to the preset direction. For example, specifically, in the embodiments shown in FIG. 3 and FIG. 4, the elastic member 45 is a spring. One end of the elastic member 45 is connected to the air tube 46, and the other end is connected to an upper end of the moving member 43, to provide a pre-tightening force enabling the moving member 43 to have a trend of moving downward in the longitudinal direction of the air tube 46. A lower end of the moving member 43 is pressed against the cleaning surface A, to enable the moving member 43 to move upward along the air tube 46. The elastic member 45 is further compressed. When the user operates and lifts the machine, the lower end of the moving member 43 is separated from the cleaning surface A, and the moving member 43 moves downward along the air tube 46 under the action of the elastic member 45. In this case, the upper end of the moving member 43 cannot be detected by the sensing apparatus 41, and the control unit controls the rotational speed of the motor to decrease.

It may be understood that the elastic member 45 is not indispensable. For example, in some embodiments, without an external force, the moving member 43 may alternatively move downward along the air tube 46 by depending on the weight of the moving member 43, so that the moving member 43 cannot be detected by the sensing apparatus 41.

In some embodiments, the sensing apparatus 41 is configured to contact the moving member 43 to perform sensing and generate the position parameter. For example, the sensing apparatus 41 may be a contact sensor switch. The moving member 43 contacts the sensing apparatus 41 to determine that the moving member 43 reaches the foregoing preset position. Specifically, in an embodiment, the moving member 43 may move in the longitudinal direction of the air tube 46. The sensing apparatus 41 is disposed on the air tube 46, and is located in the moving path of the moving member 43. If the upper end of the moving member contacts the sensing apparatus 41 to trigger the sensing apparatus 41, it indicates that the moving member 43 reaches the preset position, so that it may be determined that the distance between the nozzle of the air tube 46 and the cleaning surface A is a critical value in the appropriate range.

Certainly, in some other embodiments, the sensing apparatus 41 may further be configured to not contact the moving member 43 to perform sensing and generate the foregoing position parameter. For example, the sensing apparatus 41 may be one of an electromagnetic position sensor, a photoelectric position sensor, a differential transformer position sensor, an eddy current position sensor, a capacitive position sensor, a reed switch position sensor or a Hall position sensor. Specifically, the embodiments shown in FIG. 3 and FIG. 4, the moving member 43 may move in the longitudinal direction of the air tube 46. The sensing apparatus 41 is disposed on the air tube 46. If the upper end of the moving member 43 reaches above the sensing apparatus 41, that is, in a detectable range of the sensing apparatus 41, and the sensing apparatus 41 generates the foregoing position parameter, it indicates that the moving member 43 reaches the preset position, so that it may be determined that the distance between the nozzle of the air tube 46 and the cleaning surface A is an optimal leaf suction distance.

In some other embodiments of the present invention, the detection unit 48 may include a sliding rheostat and the moving member 43 configured to contact the cleaning surface A to be forced to move, and the moving member 43 is connected to a slider of the sliding rheostat. The target data includes an electrical parameter of a circuit to which the sliding rheostat is connected, and the control unit is configured to: calculate a target parameter value according to the electrical parameter of the circuit to which the sliding rheostat is connected during the movement of the moving member 43, and determine a current distance value of a distance between a nozzle of the air tube 46 in the operating mode and the cleaning surface A according to the target parameter value, to control the rotational speed of the motor to increase to the first speed or decrease to the second speed.

The electrical parameter may be a resistance parameter of the sliding rheostat, a current parameter in the circuit to which the sliding rheostat is connected or a voltage parameter in the circuit to which the sliding rheostat is connected. Specifically, in an embodiment, the moving member 43 may move in the longitudinal direction of the air tube 46, and is connected to the slider of the sliding rheostat. The sliding rheostat is disposed on the air tube 46, and during the movement of the moving member 43, enables the resistance of the circuit to which the sliding rheostat is connected to change, thereby changing a current value in the circuit. The target parameter may be a first-order derivative di/dt of a current value i that changes with time in the circuit to which the sliding rheostat is connected. The preset condition may be that if the target parameter is a negative value, and the current value i is lowered to the threshold, the rotational speed of the motor may be controlled to increase to the first speed.

The control unit may control the rotational speed of the motor by using the electrical parameter. Specifically, in an embodiment, if a resistance value in the circuit to which the sliding rheostat is connected gradually increases and the electrical value in the circuit gradually decreases, the control unit may control the rotational speed of the motor to be gradually increase, and vice versa. It may be understood that in some embodiments, in the process in which the moving member 43 moves upward along the air tube, the slider of the sliding rheostat is driven to move, to increase the resistance in the circuit to which the sliding rheostat is connected and decrease the electrical value in the circuit. In some other embodiments, in the process in which the moving member 43 moves upward along the air tube, the resistance in the circuit to which the sliding rheostat is connected gradually decreases, and the electrical value in the circuit gradually increases. In this case, in the process of gradually increasing the electrical value in the circuit, the control unit may control the rotational speed of the motor to be increase. In contrast, in the process of gradually decreasing the electrical value in the circuit, the control unit may control the rotational speed of the motor to decrease.

In other words, regardless of any change in the current parameter, the control unit may determine, according to a change pattern of the current parameter, the state that the direct current blowing-suction machine is expected to enter, to control the rotational speed of the motor to increase to the first speed or decrease to the second speed. It should be understood that the control unit may control the rotational speed of the motor to change nonlinearly or control the speed to increase or decrease linearly. For example, specifically, in an embodiment, in the process in which the moving member 43 moves upward along the air tube, the resistance in the circuit to which the sliding rheostat is connected increases or decreases linearly. Correspondingly, the control unit may linearly control, according to the electrical value in the circuit, the rotational speed of the motor to linearly increase or decrease.

In some embodiments of the present invention, the target data includes an inertial parameter. The inertial parameter is used for representing an inertial state of the air tube in the operating mode. The direct current blowing-suction machine further includes an inertial sensor. The inertial sensor is configured to generate and output an inertial parameter related to the movement of the air tube. The control unit is connected to the inertial sensor, and is configured to: calculate a target parameter value according to the inertial parameter outputted by the inertial sensor, and determine the inertial state of the air tube according to that the target parameter value meets a preset condition, to determine, according to the inertial state of the air tube, whether the direct current blowing-suction machine in the operating mode is expected to be in the operating state or the sleep state, to control the rotational speed of the motor to match the operating state or the sleep state.

The inertial parameter outputted by the inertial sensor may be used for determining the inertial state of the air tube. For example, the inertial sensor may include inertial devices such as a three-axis accelerometer, a three-axis magnetic sensor, and a three-axis gyroscope. In this way, the inertial parameter outputted by the inertial sensor may include acceleration information, magnetic field information, and angular velocity information. The inertial state of the air tube may be determined according to the information in the inertial parameter. Certainly, the structure of the inertial sensor described above is merely an example. The inertial sensor may be another structure. This is not limited herein.

The control unit is configured to determine the inertial state of the air tube according to the inertial parameter outputted by the inertial sensor. In some embodiments, the inertial state of the air tube may be a movement from bottom to top or a movement from top to bottom or a swing, and is specifically applied to the direct current blowing-suction machine. The inertial state of the air tube may be that the machine is operated to move the air tube upward or that the machine is operated to move the air tube downward or that the machine is operated to swing the air tube from right to left.

It may be understood that the inertial state of the air tube may be either a linear movement or a non-linear movement. This is not limited herein.

In some embodiments, when the inertial sensor detects that the direct current blowing-suction machine moves downward toward the cleaning surface A, the direct current blowing-suction machine in the operating mode is expected to be in the operating state, and the control unit controls the rotational speed of the motor to be the first speed. When the inertial sensor detects that the direct current blowing-suction machine moves upward away from the cleaning surface A, the direct current blowing-suction machine in the operating mode is expected to be in the sleep state, and the control unit controls the rotational speed of the motor to be the second speed.

In this way, if the control unit determines that the direct current blowing-suction machine moves upward, it may be determined that the user does not intend to perform suction, and the control unit controls the rotational speed of the motor to decrease. If the control unit determines that the direct current blowing-suction machine moves downward, it may be determined that the user intends to perform suction, and the control unit controls the rotational speed of the motor to increase, to further reduce the power usage of the direct current blowing-suction machine in the sleep state, so that energy is saved and the direct current blowing-suction machine is more intelligent and operable.

In some embodiments of the present invention, when the control unit detects that the direct current blowing-suction machine swings, the direct current blowing-suction machine in the operating mode is expected to be in an operating state, and the control unit controls the rotational speed of the motor to be the first speed. It may be understood that target objects are generally irregularly scattered on the cleaning surface A. For example, target objects such as leaves and dust are scattered on the ground in piles or groups. In the process of operating the direct current blowing-suction machine for cleaning, the user needs to operate the machine to enable a region in which the nozzle of the air tube can suck target objects to cover a region in which the target objects are scattered. That is, the user needs to operate the direct current blowing-suction machine to swing back and forth to clean the target objects. Specifically, in an embodiment, when the user operates the direct current blowing-suction machine to swing right and left or back and forth, it may be determined that the user needs the direct current blowing-suction machine to be in the operating state to clean target objects.

In this way, the operating habits of the user in the process of cleaning the target objects are satisfied, so that the direct current blowing-suction machine further becomes more intelligent and operable.

It should further be understood that for the direct current blowing-suction machine, to ensure an adequate cleaning effect, in the operation process, the user enables a region range in which the nozzle of the air tube can suck target objects to completely cover a region range in which the target objects are scattered. Therefore, to improve the detection accuracy of the inertial sensor, in a preferred embodiment, the inertial sensor should be disposed on the air tube. Certainly, in some other embodiments, the inertial sensor is alternatively disposed in the main housing or another position. This is not limited herein.

It may be understood that the swing of the direct current blowing-suction machine may be either a linear movement or a non-linear movement. This is not limited herein.

In some embodiments of the present invention, the control unit is configured to: determine an angle of the air tube relative to a cleaning surface according to the inertial parameter outputted by the inertial sensor, and determine, according to the angle of the air tube relative to the cleaning surface, whether the direct current blowing-suction machine in the operating mode is expected to be in the operating state or the sleep state, to control the rotational speed of the motor to match the operating state or the sleep state. For example, when the user operates the direct current blowing-suction machine to move downward, the control unit determines, according to the inertial parameter outputted by the inertial sensor, that the angle of the air tube relative to the cleaning surface is in a range of 30 degrees to 60 degrees. In this case, the control unit determines that the user expects the direct current blowing-suction machine to perform suction, and controls the rotational speed of the motor to be the first speed. When determining, according to the inertial parameter outputted by the inertial sensor, that the angle of the air tube relative to the cleaning surface is less than 30 degrees or greater than 60 degrees, the control unit may determine that the user expects the direct current blowing-suction machine to enter the sleep state, and controls the rotational speed of the motor to be the second speed.

It may be understood that a threshold set for an angle of the air tube relative to the cleaning surface may be set according to the operating habits of the users or an operating condition of the blowing-suction machine. This is not limited herein.

It may further be understood that the direct current blowing-suction machine is provided with a plurality of air speeds. At air speeds in different gears, thresholds set for the angle of the air tube relative to the cleaning surface may be the same or different. A specific threshold may be set according to an actual case. This is not limited herein.

It needs to be noted that obtaining an angle of an air tube relative to a cleaning surface through an inertial sensor is well known to a person skilled in the art. Therefore, the specific structure and principle are not described herein again.

In an embodiment of the present invention, the direct current blowing-suction machine is powered by a battery pack. Therefore, the battery pack is detachable and can be repeatedly charged and discharged.

It is easily understood that when a power source is an alternating current power supply, outdoor operations are inconvenient for a user due to the limitations of the length of a power cable and the position of a socket, and an excessively long power cable is prone to particular potential hazards. Therefore, the direct current blowing-suction machine is powered by the direct current of a battery pack. The direct current blowing-suction machine in the embodiments of the present invention, a user does not need to change operating habits, and adjusts a rotational speed of a motor by only lifting or lowering a nozzle of an air tube by moving the direct current blowing-suction machine, to save electrical energy and increase a standby time of a single battery pack, thereby improving the operability.

It is specially emphasized that because the detection unit 48 is provided in various forms, when the detection unit is applied to different types of direct current blowing-suction machines, the arrangement positions of the detection unit 48 are different.
(1) When the detection unit includes the distance sensor, because non-contact ranging is performed on the distance sensor and the cleaning surface A, the detection unit may be disposed at the main housing or the air tube assembly. For a suction-only machine or a direct current blowing-suction machine having a single air tube, the distance sensor may be mounted on the main housing 12 or a single tube 18 shown in FIG. 1. For the direct current blowing-suction machine having double air tubes connected to the main housing 12 simultaneously shown in FIG. 2, the distance sensor may be disposed on the main housing 22, the air blowing tube 262 or the air suction tube 264. For the direct current blowing-suction machine having an air blowing tube and an air suction tube that are independent of each other, the distance sensor may be disposed on the main housing or the air suction tube.
(2) When the detection unit includes the sensing apparatus and the moving member 43 configured to contact the cleaning surface A to be forced to move, because the moving member needs to contact the cleaning surface A to generate a displacement to determine the distance between the nozzle of the air tube used for sucking a target object and the cleaning surface A, the detection unit is disposed on the air tube used for sucking a target object. For a suction-only machine or a direct current blowing-suction machine having a single air tube, the distance sensor may be mounted on the single tube 18 shown in FIG. 1. For the direct current blowing-suction machine having double air tubes connected to the main housing 22 together shown in FIG. 2, the distance sensor may be disposed on the air suction tube 264. For the direct current blowing-suction machine having an air blowing tube and an air suction tube that are independent of each other, the distance sensor may be disposed on the air suction tube.
(3) When the detection unit includes the sliding rheostat and the moving member configured to contact the cleaning surface A to be forced to move, similarly, the moving member needs to contact the cleaning surface A to generate a displacement to determine the distance between the nozzle of the air tube used for sucking a target object and the cleaning surface A. Therefore, the detection unit is disposed on the air tube, which is used for sucking a target object, in the air tube assembly.

Some embodiments of the present invention are further described below in detail.

As shown in FIG. 3 and FIG. 4, in some embodiments of the present invention, a direct current blowing-suction machine 40 includes a body and an air tube assembly. The body includes a main housing 42. The main housing 42 is used for protecting elements inside the main housing. In different embodiments, the housing may be integrally formed or may be formed by half housings. The half housings may be fixedly connected by a fastening element such as a screw. The air tube assembly includes the air tube 46. A front end of the main housing 12 is provided with a connection interface. The air tube 46 is connected to the main housing 12 through the connection interface. The air tube 46 is hollow inside for providing a channel for air circulation to enable an airflow to be blown to or sucked from the outside.

The direct current blowing-suction machine 40 further includes an airflow generation apparatus. The airflow generation apparatus includes a rotatable fan assembly and a motor configured to drive the fan assembly to rotate. The motor is configured to provide power. In this embodiment, the motor is driven by electrical power. In some other embodiments, the motor may be a pneumatic motor or may be a gasoline motor using gasoline as a fuel. Certainly, the airflow generation apparatus is further not limited to including the fan assembly and the motor. For example, the airflow generation apparatus is driven in a manner of using a new power technology such as a magnetic power technology to generate an airflow.

The fan is connected to the motor, to be driven by an output shaft of the motor to correspondingly rotate, to drive air near the fan to flow in a preset direction, thereby forming an airflow. The main housing 12 is provided with an air intake opening and a dust outlet. The dust outlet is used for connecting to a dust collection apparatus. The main housing 12 is further provided with a single-chamber port 44. The single-chamber port 44 is configured to be connected to a single blowing tube, a single suction tube or a blowing-suction tube having both a blowing function and a suction function. A switching mechanism is also disposed in the main housing 12. The switching mechanism is an entity that can rotate around the rotating axis, to operably enable the air intake opening or the dust outlet to communicate with the single-chamber port 44. When the air intake opening is in communication with the single-chamber port 44, the direct current blowing-suction machine is in a blowing mode. When the dust outlet is in communication with the single-chamber port 44, the direct current blowing-suction machine is in a suction mode.

A handle portion for gripping is also disposed on the main housing 42. The handle portion is disposed in a curved manner. Two ends of the handle portion are respectively connected to a rear end of the main housing 42, to form a grip space. When the direct current blowing-suction machine is operated, the handle portion is located at a rear end of the direct current blowing-suction machine. More specifically, the handle portion is located at a read end of the motor. The dust collection apparatus is substantially located below the motor. In a preferred embodiment, a control switch controlling the rotation direction of the motor may also be disposed on the handle portion, to control the motor to rotate in a clockwise or counterclockwise direction, so that the direct current blowing-suction machine 40 may switch between the blowing mode and the operating mode. The control switch may further be integrated with other functions such as a speed adjustment function, so that the rotational speed of the motor may be adjusted in a stepless or stepwise direction.

The detection unit 48 includes a sensing apparatus 41 and the moving member 43 configured to contact the cleaning surface A to be forced to move. Specifically, in an embodiment, a sliding seat 462 is disposed on the air tube 46. The moving member 43 is a push rod extending in a longitudinal direction, and slides along the air tube 46 in the longitudinal direction to be connected to the sliding seat 462. A slider 432 is disposed at the upper end of the moving member 43. One end of the elastic member 45 abuts against the sliding seat 462, and the other end abuts against the slider 432, to provide a pre-tightening force enabling the moving member 43 to have a trend of moving downward in the longitudinal direction of the air tube 46. When the user operates the machine to move downward, the lower end of the moving member 43 abuts against the cleaning surface A to enable the moving member to move upward in the longitudinal direction of the air tube 46. The sensing apparatus 41 is a position sensor. When the slider 432 is located above the sensing apparatus 41, the sensing apparatus 41 detects the slider 432 and generates a position signal. In this case, the control unit determines, according to the position parameter, that the distance between the nozzle of the air tube 46 and the cleaning surface A is an optimal leaf suction distance, to determine that the direct current blowing-suction machine 40 is in the operating state, to control the rotational speed of the motor to be the first speed.

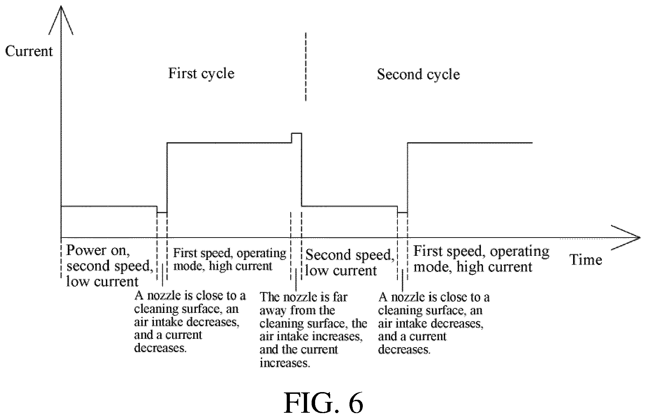

In some embodiments of the present invention, the target data includes a current parameter, the current parameter is used for representing a distance between a nozzle of the air tube in the operating mode and a cleaning surface, the detection unit further includes a current detection circuit configured to obtain a current parameter value, and the control unit determines the distance between the nozzle of the air tube in the operating mode and the cleaning surface according to the current parameter. FIG. 6 shows a relationship between the current parameter and time of the blowing-suction machine during operation in the operating mode. Specifically, when the nozzle of the air tube moves toward the cleaning surface, air that enters the nozzle of the air tube is blocked by the cleaning surface, causing a decrease in an air intake. That is, the load of the blowing-suction machine is reduced, and the current parameter value obtained by the detection unit decreases. When an operator lifts the air tube, the nozzle of the air tube moves away from the cleaning surface. The air intake changes greatly within a short time. The load of the blowing-suction machine becomes larger, causing an increase in the current parameter. It may be learned from the above that the change of the current parameter value in the operating mode can reflect the distance between the nozzle of the air tube and the cleaning surface. That is, it may be substantially determined, by using the current parameter value, whether the nozzle of the air tube is far away from the cleaning surface or close to the cleaning surface.

In an embodiment of the present invention, in the operating mode, the control unit controls the blowing-suction machine to start at the second speed. The blowing-suction machine in a starting state has not started operating, and starts at the relative low second speed, so that energy consumption can be further reduced. When the operator controls the nozzle of the air tube to move toward the cleaning surface, the air intake decreases, causing a further decrease in the current. If the detection unit detects that the current parameter value is less than the first preset current value, the control unit determines that the nozzle is close to the cleaning surface, to control the blowing-suction machine to switch to the operating state and rotate at the first speed. In the operating state, if the operator lifts the nozzle of the air tube, the air intake is increased, causing an increase in the current. If the detection unit detects that the current parameter value is greater than a second preset current value, the control unit determines that the nozzle is far away from the cleaning surface, and controls the blowing-suction machine to switch to the sleep state.

The blowing-suction machine provided in this embodiment can determine a corresponding position relationship between the nozzle and the cleaning surface according to the current parameter in the operating mode without adding an extra sensor element or another detection member, and can determine the corresponding position relationship between the nozzle and the cleaning surface through the existing control unit based on the original structure, so that there is nearly no increase in costs, and both energy conservation and emission reduction of the blowing-suction machine are achieved.

Based on the foregoing direct current blowing-suction machine, as shown in FIG. 5, the present invention further provides a control method of a direct current blowing-suction machine, including the following steps:
S 110: Obtain target data, the target data being used for representing an operating state feature of an air tube.

The operating state feature of the air tube includes a distance between a nozzle of the air tube in an operating mode and a cleaning surface or an inertial state of the air tube in the operating mode.

The target data representing the distance between the nozzle of the air tube, which is used for sucking a target object, of the air tube assembly and the cleaning surface A may be a distance value of the distance between the nozzle of the air tube used for sucking a target object and the cleaning surface A or an indirectly obtained parameter of the distance between the nozzle of the air tube used for sucking a target object and the cleaning surface A.

S 120: Determine, according to the target data, whether a direct current blowing-suction machine in an operating mode is expected to be in an operating state or a sleep state, to control, according to a determination result, a rotational speed of a motor to match the operating state or the sleep state.

In the operating mode, the direct current blowing-suction machine has the operating state and the sleep state. For example, in some embodiments, to suck leaves or other target objects discontinuously distributed on the ground, when a user operates a machine to move downward or move toward a target object to enable a distance between the nozzle of the air tube used for sucking a target object and a cleaning surface A to be in an appropriate range, the direct current blowing-suction machine is in an operating state. When the user operates the machine to move upward or move away from the cleaning surface A to enable the distance between the nozzle of the air tube used for sucking a target object and the cleaning surface A to be out of the foregoing appropriate range, the direct current blowing-suction machine is in the sleep state.

When the foregoing direct current blowing-suction machine sucks leaves or other target objects discontinuously distributed on the ground, if the user operates the machine to move downward or move toward a target object to enable the distance between the nozzle of the air tube and the cleaning surface A to be in the appropriate range or the user operates the machine to swing, the control unit may determine that the direct current blowing-suction machine is expected to be in an operating state of normally sucking an object, and control the rotational speed of the motor to be at a relative high level. When the user operates the machine to move upward or move away from the cleaning surface A to enable the distance between the nozzle of the air tube and the cleaning surface A to be out of the foregoing appropriate range, the control unit may determine that the direct current blowing-suction machine is expected to be in the sleep state, and control the rotational speed of the motor to be at a relative low level or to be stopped.

In this way, the user does not need to change operating habits. The rotational speed of the motor may be adjusted by lifting, lowering, or swinging the nozzle of the air tube by moving the direct current blowing-suction machine, to reduce the power usage of the direct current blowing-suction machine in the sleep state, thereby saving energy. The rotational speed of the motor does not need to be changed by manually adjusting gears, so that operations are convenient, and the direct current blowing-suction machine is more intelligent and operable.

The technical features in the foregoing embodiments may be randomly combined. For concise description, not all possible combinations of the technical features in the embodiments are described. However, as long as combinations of the technical features do not conflict with each other, the combinations of the technical features are considered as falling within the scope described in this specification.

The foregoing embodiments only describe several implementations of the present invention, and their description is specific and detailed, and therefore cannot be understood as a limitation to the patent scope of the present invention. It should be noted that, a person of ordinary skill in the art may further make some variations and improvements without departing from the concept of the present invention, and the variations and improvements belong to the protection scope of the present invention. Therefore, the protection scope of the patent of the present invention shall be topic to the claims.

## Claims

1. A garden power tool, powered by a battery pack, the garden power tool comprising:
a main housing;
a motor, disposed in the main housing;
a fan assembly, driven by the motor to rotate to generate an airflow; and
an air tube assembly, connected to the main housing, and comprising an air tube used for sucking a target object, wherein
when the garden power tool is in an operating mode, the fan assembly rotates to generate a suction airflow flowing in from the air tube; and
in the operating mode, the garden power tool comprises an operating state of normally sucking an object and a sleep state of not sucking an object, and the garden power tool further comprises:
a detection unit, configured to obtain target data, the target data being used for representing an operating state feature of the air tube in the operating mode; and
a control unit, connected to the detection unit and the motor, the control unit being configured to determine, according to the target data, whether the garden power tool in the operating mode is expected to be in the operating state or the sleep state, to control, according to a determination result, a rotational speed of the motor to match the operating state or the sleep state.

2. The garden power tool according to claim 1, wherein a diameter of a nozzle of the air tube is in a range of 100 mm to 150 mm.

3. The garden power tool according to claim 1, wherein in the operating state, the motor operates at a first speed of normal operation; and
in the sleep state, the motor operates at a second speed of not sucking an object, the second speed being less than the first speed.

4. The garden power tool according to claim 3, wherein when the motor operates at the first speed, a rotational speed of the motor is in a range of 10000 r/min to 30000 r/min; and
when the motor operates at the second speed, the rotational speed of the motor is less than 10000 r/min or is 0.

5. The garden power tool according to claim 3, wherein the target data comprises a distance parameter, and the distance parameter is used for representing a distance between a nozzle of the air tube in the operating mode and a cleaning surface.

6. The garden power tool according to claim 5, wherein the detection unit comprises a distance sensor, and the distance sensor is configured to obtain the distance parameter representing the distance between the nozzle of the air tube in the operating mode and the cleaning surface.

7. The garden power tool according to claim 6, wherein the control unit is configured to compare a distance parameter currently detected by the distance sensor with a preset distance parameter value, when the distance parameter currently detected by the distance sensor is less than or equal to the preset distance parameter value, the garden power tool in the operating mode is expected to be in the operating state, and the control unit controls the rotational speed of the motor to be the first speed; and
when the distance parameter currently detected by the distance sensor is greater than the preset distance parameter value, the garden power tool in the operating mode is expected to be in the sleep state, and the control unit controls the rotational speed of the motor to be the second speed.

8. The garden power tool according to claim 7, wherein when the distance parameter currently detected by the distance sensor is greater than the preset distance parameter value, after a preset time period, the control unit controls the rotational speed of the motor to switch to the first speed.

9. The garden power tool according to claim 7, wherein the preset distance parameter value is specifically a punctual value, and the preset distance parameter value is approximately 50 cm.

10. The garden power tool according to claim 6, wherein the distance sensor is disposed in the main housing or the air tube assembly.

11. The garden power tool according to claim 3, wherein the target data comprises a position parameter, and the position parameter is used for representing a position of the air tube relative to a cleaning surface in the operating mode.

12. The garden power tool according to claim 11, wherein the detection unit comprises a sensing apparatus and a moving member configured to contact the cleaning surface to be forced to move in a preset direction; and
the control unit is configured to: calculate a target parameter value according to a position parameter generated by the sensing apparatus in response to the movement of the moving member, and determine a current distance value of a distance between a nozzle of the air tube in the operating mode and the cleaning surface according to that the target parameter value meets a preset condition, to determine whether the garden power tool in the operating mode is expected to be in the operating state or the sleep state, to control the rotational speed of the motor to match the operating state or the sleep state.

13. The garden power tool according to claim 12, wherein the sensing apparatus is configured to contact the moving member to perform sensing and generate the position parameter, and the sensing apparatus is a contact sensor switch.

14. The garden power tool according to claim 12, wherein the sensing apparatus is configured to not contact the moving member to perform sensing and generate the position parameter.

15. The garden power tool according to claim 3, wherein the detection unit is disposed on the air tube;
the detection unit comprises a sliding rheostat and a moving member configured to contact a cleaning surface to be forced to move, and the moving member is connected to a slider of the sliding rheostat; and
the target data comprises an electrical parameter of a circuit to which the sliding rheostat is connected, and the control unit is configured to: calculate a target parameter value according to the electrical parameter of the circuit to which the sliding rheostat is connected during the movement of the moving member, and determine a current distance value of a distance between a nozzle of the air tube in the operating mode and the cleaning surface according to that the target parameter value meets a preset condition, to control the rotational speed of the motor to increase to the first speed or decrease to the second speed.

16. The garden power tool according to claim 12 or 15, wherein the detection unit further comprises an elastic member, and the elastic member is disposed on the air tube, and is configured to provide a pre-tightening force enabling the moving member to have a moving trend in a direction opposite to the preset direction.

17. The garden power tool according to claim 3, wherein the target data comprises an inertial parameter, the inertial parameter is used for representing an inertial state of the air tube in the operating mode, and the inertial state comprises a moving direction of the air tube; the detection unit further comprises an inertial sensor, and the inertial sensor is configured to sense and output the inertial parameter related to the inertial state of the air tube; and the control unit is connected to the inertial sensor and is configured to: calculate a target parameter value according to the inertial parameter outputted by the inertial sensor, and determine the inertial state of the air tube according to that the target parameter value meets a preset condition, to determine, according to the inertial state of the air tube, whether the garden power tool in the operating mode is expected to be in the operating state or the sleep state, to control the rotational speed of the motor to match the operating state or the sleep state.

18. The garden power tool according to claim 17, wherein when the air tube moves downward toward a cleaning surface, the garden power tool in the operating mode is expected to be in the operating state, and the control unit controls the rotational speed of the motor to be the first speed; and
when the air tube moves upward away from the cleaning surface, the garden power tool in the operating mode is expected to be in the sleep state, and the control unit controls the rotational speed of the motor to be the second speed.

19. The garden power tool according to claim 17, wherein when the air tube swings, the garden power tool in the operating mode is expected to be in the operating state, and the control unit controls the rotational speed of the motor to be the first speed.

20. The garden power tool according to claim 3, wherein the target data comprises a current parameter, the current parameter is used for representing a distance between a nozzle of the air tube in the operating mode and a cleaning surface, the detection unit further comprises a current detection circuit configured to obtain a current parameter value, and the control unit determines the distance between the nozzle of the air tube in the operating mode and the cleaning surface according to the current parameter.

21. The garden power tool according to claim 20, wherein in the operating mode, if the detection unit detects that the current parameter value is less than a first preset current value, the control unit determines that the nozzle is close to the ground, to control the garden power tool to switch to the operating state; and if the detection unit detects that the current parameter value is greater than a second preset current value, the control unit determines that the nozzle is far away from the ground, to control the garden power tool to switch to the sleep state.

22. The garden power tool according to claim 3, wherein in the operating mode, the control unit controls the garden power tool to start at the second speed.

23. The garden power tool according to claim 1, wherein the control unit is suitable for controlling a current flowing through the motor, to change the rotational speed of the motor.

24. The garden power tool according to claim 1, wherein the control unit is further configured to turn off the motor after the garden power tool is in the sleep state for a preset time period.

25. A control method of a garden power tool, the garden power tool comprising an air tube used for sucking a target object, wherein the control method comprises the following steps:
obtaining target data, the target data being used for representing an operating state feature of the air tube in an operating mode; and
determining, according to the target data, whether the garden power tool in the operating mode is expected to be in an operating state or a sleep state, to control, according to a determination result, a rotational speed of a motor to match the operating state or the sleep state.
